Europäisches Patentamt

European Patent Office

Office européen des brevets

(11) Veröffentlichungsnummer: **0 469 538 A1**

## EUROPÄISCHE PATENTANMELDUNG

(21) Anmeldenummer: **91112775.1**

(51) Int. Cl.⁵: **B23Q 17/22**

(22) Anmeldetag: **30.07.91**

(30) Priorität: **01.08.90 DE 9011282 U**

(43) Veröffentlichungstag der Anmeldung:
**05.02.92 Patentblatt 92/06**

(84) Benannte Vertragsstaaten:
**CH DE FR GB LI**

(71) Anmelder: **ROBERT BOSCH GmbH**
**Postfach 10 60 50**
**W-7000 Stuttgart 10(DE)**

(72) Erfinder: **Demuth, Thomas, Dipl.-Ing.**
**Meisenstrasse 11**
**W-7042 Marbach(DE)**

(54) **Oberfräse.**

㊼ Für eine Handoberfräse mit einem ein Fräswerkzeug (5) umschließenden Auflagefuß (1), zu dem die Werkzeugdrehachse (7) normal verläuft und mit dem die Oberfräse über die Werkstückoberfläche (11) geführt wird, ist vorgeschlagen, daß mindestens ein Anschlagmittel (25, 27) an dem Auflagefuß (1) bis an das Fräswerkzeug (5) heran bzw. darüber hinaus verschiebbar angeordnet ist und daß das Anschlagmittel (25, 27) eine vorzugsweise nah benachbart zu einer zu bearbeitenden Werkstückoberfläche (11) angeordnete Markierung (33, 35) trägt. Dadurch sind Anfang und/oder Ende einer IST-Schnittkante mittels Zielmarkierung genau mit einer Anreißlinie für eine Soll-Schnittkante in Übereinstimmung zu bringen.

FIG.1

Die Erfindung betrifft eine Handoberfräse entsprechend der Gattung des Oberbegriffs des Anspruchs 1.

Mit einer derartigen aus der DE-PS 36 44 925 bekannten Handoberfräse wird eine Nut in ein Werkstück gefräst, indem die Handoberfräse in Vorschubrichtung auf dem Werkstück bewegt wird. Die Handoberfräse kann mit oder ohne schienenartige Führungssysteme verwendet werden. Eine Führungsschiene kommt insbesondere dann infrage, wenn mehrere exakt parallel zueinander verlaufende Nuten hergestellt werden sollen.

Bei der bekannten Handoberfräse können die Schneidkanten des rotierenden Fräswerkzeugs nur undeutlich erkannt werden, weil der Auflagefuß sowie Späne und Staub die Sicht auf die Schneidkanten behindern. Dadurch ergibt sich der Nachteil, daß Anfang bzw. Ende einer zu fräsenden Nut zu einer Vorlage oder zu Anreißlinien nur ungenau oder nur mit sehr hohem Aufwand genau herstellbar sind. Derartige Ungenauigkeiten können nachträglich nur mit hohem Aufwand korrigiert werden, wobei meistens zusätzliche Ungenauigkeiten entstehen, wie z.B. ein Versatz der Nut. Dieser Mangel wird noch deutlicher, wenn mehrere parallele Nuten gleicher Länge mit gleichem Verlauf gefräst werden sollen.

Aus diesem Grund ist zur Bestimmung der Schneidkantenposition des Fräsers der bekannten Handoberfräse eine Werkzeugmittenmarkierung vorgesehen, die auf eine mit jedem Wechsel des Fräswerkzeugs neu zu ermittelnde Werkzeugmittenachse "zielend" eingestellt wird. Zur Bestimmung der Endkante einer Nut wird der Abstand der Schneidkante des Fräsers zur Werkzeugmitte über die Werkzeugmittenmarkierung mit Hilfe der Skala geschätzt bzw. das halbe Durchmessernennmaß des Fräsers wird an einer Skala, ausgehend vom Skalenstrich für die Werkzeugmitte "abgelesen". Dazu muß zunächst die Werkzeugmittenmarkierung möglichst genau justiert werden, weil deren Abweichung von der virtuellen Werkzeugmitte zu einem entsprechenden Fehler bei der Anzeige der Werkzeugschneidkante führt. Jeder Justierfehler addiert sich hier unmittelbar auf das Meßergebnis der Schneidkantenlage.

Der Bediener der Maschine ist also allein auf sein Augenmaß angewiesen, wenn er einen von mehreren Skalenstrichen einem Schneidkantenmaß zuordnet und diesen Skalenstrich durch Verschieben des Maschinenfußes bzw. der gesamten Handoberfräse auf der Werkstückoberfläche mit einer Anrißlinie auf einer Werkstückoberfläche in Übereinstimmung bringen will.

Entsprechend der Patentanmeldung GB 2 011 834 ist eine Handkreissäge bekannt, deren Schnittkantenanzeiger seitlich an das Sägeblatt führbar ist und an seiner Anschlagkante die Längskante des entstehenden Schnittkanals anzeigt. Dessen Endkante oder die einer mit einer Handoberfräse hergestellten Nut kann damit jedoch nicht bestimmt werden.

Vorteile der Erfindung

Die vorliegende Erfindung mit den kennzeichnenden Merkmalen des Anspruchs 1 hat den Vorteil, daß mit einfachen Mitteln Anfang und Ende von Fräsnuten während des Fräsens genau bestimmt werden können, bzw. daß zusätzlich auch die genaue Position der in Vorschubrichtung verlaufenden Schneidkante angezeigt werden kann. Diese Aufgabe wird erfindungsgemäß durch die kennzeichnenden Merkmale des Anspruchs 1 gelöst. Die Merkmale der übrigen Ansprüche dienen der weiteren, vorteilhaften Ausgestaltung der Erfindung.

Zeichnungen

Nachstehend ist die Erfindung an einem Ausführungsbeispiel mit zugehöriger Zeichnung erläutert. Figur 1 zeigt einen Auflagefuß einer Oberfräse mit einem ersten Ausführungsbeispiel zweier Schneidkantenanzeiger, Figur 2 zeigt ein weiteres Ausführungsbeispiel eines Schneidkantenanzeigers als Einzelheit und Figur 3 zeigt ein zusätzliches Ausführungsbeispiel eines Schneidkantenanzeigers als Einzelheit.

Beschreibung des Ausführungsbeispiels

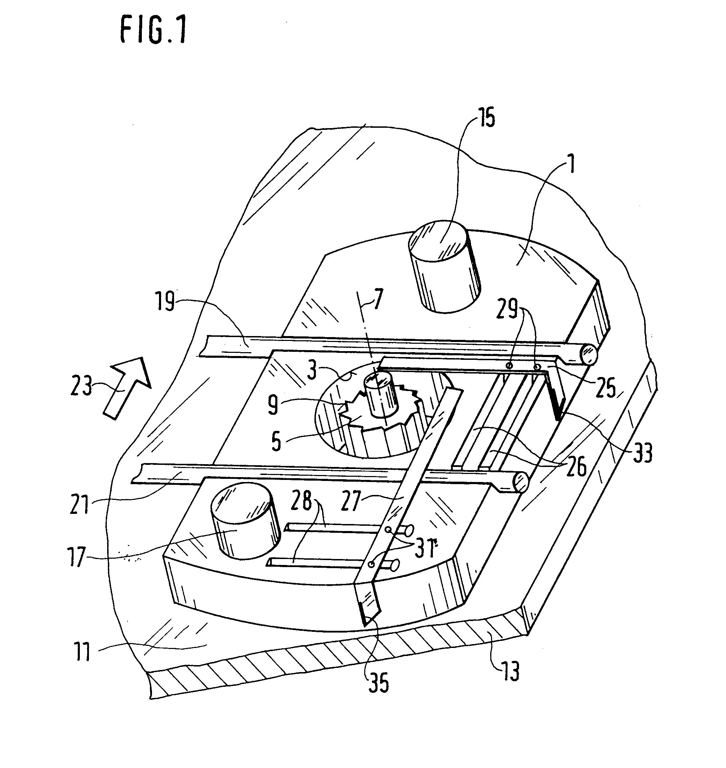

Der in Figur 1 gezeigte Auflagefuß 1 einer nicht im einzelnen dargestellten Handoberfräse hat eine zentrale Durchtrittsöffnung 3 für ein Fräswerkzeug 5. Das Fräswerkzeug 5 hat eine Werkzeugdrehachse 7, die normal zum Auflagefuß 1 verläuft. Außerdem besitzt das Fräswerkzeug 5 an seiner Peripherie Schneidkanten 9.

Der Auflagefuß 1 stutzt sich auf der Werkstückoberfläche 11 eines Werkstücks 13 ab. Auf dem Auflagefuß 1 sind die Säulenführungen 15, 17 zur Höhenverstellung der nicht mit dargestellten Handoberfräse teilweise sichtbar. Außerdem sind am Auflagefuß 1 montierte Verbindungsstreben 19, 21 gezeigt. Diese sind mit einem nicht dargestellten Parallel oder Führungsanschlag koppelbar, mit denen die Handoberfräse parallel zu einer nicht dargestellten Werkstückkante bzw. Führungsschiene verschoben werden kann. Der in Betrachtungsrichtung der Figur 1 links angeordnete Pfeil 23 zeigt eine mögliche Vorschubrichtung der Handoberfräse.

Auf der Oberseite des Auflagefußes 1 sind parallel bzw. rechtwinklig zur Vorschubrichtung leistenartige Anschlagmittel 25, 27 angeordnet, die normal zur ihrer Längsachse in Führungsbahnen 26, 28 verschiebbar sind. Über Führungsstücke 29, 31 sind die Ahschlagmittel 25, 27 in den Führungsbahnen 26, 28 gegen Herausfallen gesichert. Auf ihrem abgewinkelten, auf das Werkstück weisenden Teil tragen die Anschlagmittel 25, 27 pfeilartige Markierungen 33, 35. Außerdem bilden die dem Fräswerkzeug 5 zugewandten Längskanten einen spitzen Winkel mit der Endkante der Anschlagmittel 25, 27.

Die dem Fräswerkzeug 5 zugewandten Innenkanten der Anschlagmittel 25, 27 sind aus besonders glattem, oberflächenhartem Material, das bei Berühren des sich drehenden Fräswerkzeugs 5 nicht verschleißt. Die Markierungen 33, 35 sind die eigentlichen Schneidkantenanzeiger.

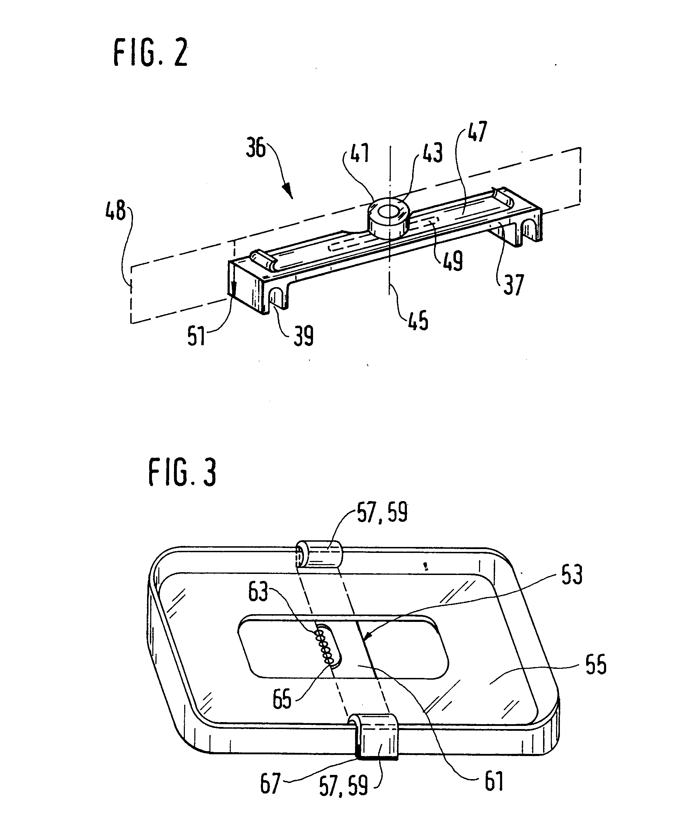

Das in Figur 2 gezeigte Anschlagmittel besteht aus einem Anschlagträger 37, der verschiebbar auf einem nicht dargestellten Auflagefuß angeordnet ist. Die u-förmigen, nach unten gerichteten seitlichen Enden des Anschlagmittels können winklig nach oben stehende Seitenkanten des Auflagefußes umgreifen und entlang diesen verschoben werden. Eigentlicher Anschlag 41 zum Berühren der Werkzeugschneidkanten eines nichtdargestellten Fräswerkzeuges ist hier ein drehbar gelagerter Wälzkörper 43, dessen Drehachse 45 im wesentlichen parallel zur Werkzeugdrehachse des Fräswerkzeugs verlaufen soll. Die Drehachse 45 wird durch einen nicht im Einzelnen dargestellten Bolzen gebildet, der in einem aus Blech bestehenden Achsenträger 47 verankert ist. Der Achsenträger 47 ist längs zum Anschlagträger 37 hin- und herschiebbar, so daß dadurch der Wälzkörper 43 mit Sicherheit in eine Position zur Werkzeugdrehachse 7 gebracht werden kann, in der er gerade noch die Werkzeugschneidkanten 9 berührt. Der Achsenträger 47 ist dabei in einem Langloch 49 geführt. Die dem Fräswerkzeug zuzuordnende, gestrichelt dargestellte Tangentialebene 48 am Wälzkörper 43 ist durch eine Markierung 51 am Anschlagträger 37 erkennbar gemacht. Diese Markierung 51 ist der eigentliche Schneidkantenanzeiger.

Das in Figur 2 gezeigte Anschlagmittel kann in Mehrfachanordnung an einem Auflagefuß an der Handoberfräse angeordnet sein.

Das in Figur 3 gezeigte Anschlagmittel 53 ist an einem nicht im einzelnen dargestellten Auflagefuß 55 einer nicht mit dargestellten Handkreissäge angebracht. Die hochgebogenen Enden 57, 59 des Anschlagträgers 61 sind an den hochgebogenen Außenrändern des Auflagefußes 55, die sie übergreifen, verschiebbar geführt. Das Anschlagmittel 53 trägt auf seiner dem Werkzeug zugewandten Seite kugelförmige Wälzkörper 63, die perlenartig auf einen gespannten Draht 65 gefädelt sind. Die Wälzkörper 63 sind besonders abriebfest damit sie beim beim Kontakt mit den Schneidkanten des nicht dargestellten Sägeblattes nur minimal verschleißen. Die Wälzkörper 63 bilden den eigentlichen Anschlag, wobei die verlängerte Verbindungslinie deren äußerster Kanten mit der Markierung 67 übereinstimmen, die den eigentlichen Schneidkantenanzeiger bildet.

Die Anschlagmittel 25, 27, 36, 53 haben ein übereinstimmendes Funktionsprinzip: Bei um die Werkzeugdrehachse drehendem Werkzeug werden die Anschlagmittel an dieses Werkzeug herangeführt, bis eine Berührung spürbar wird. Damit ist die achsfernste Schneidkante des jeweiligen Fräswerkzeugs ertastet. Über die Markierungen 33, 35 ist die Lage der Schneidkante sozusagen über eine Tangente am Umlaufkreis der Werkzeugschneide am Auflagefuß sichtbar gemacht.

In der einfachsten Form wirkt, wie im Ausführungsbeispiel der Figur 1, Gleitreibung an den Anschlagmitteln. In den Ausführungsbeispielen der Figur 2 und 3 ist Rollreibung zwischen den Werkzeugdrehachsen und den Anschlagmitteln gesichert. Die Markierungen 33, 35, 51, 67 der Figuren 1 bis 3 lassen die momentane Schneidkantenposition des Werkzeuges am Werkstück und damit Anfang und Ende einer zu schneidenden Nut unmittelbar auf der Werkstückoberfläche genau erkennen.

In weiterführender Abwandlung sind derartige Anschlagmittel bzw. Wirk- oder Schneidkantenanzeiger auch zur Anwendung an Winkelschleifern, Handhobeln, Stichsägen und Bandschleifern verwendbar. Aufgrund der vorliegenden Ausführungsbeispiele liegt es nahe, auch berührungsfreie Meßmittel in Form von Lichtschranken, Lasern oder dergl. entsprechend der Erfindung anzuwenden.

Die erfindungsgemäßen Schneidkantenanzeiger sind vor allem an Handwerkzeugen sinnvoll anwendbar, die für den wechselnden Einsatz von Werkzeugen unterschiedlicher Abmessungen vorgesehen sind bzw. deren Schneidkantenlage gegenüber dem Auflagefuß verstellbar ist, d.h. deren Schneidkanten dementsprechend wechselnde Positionen einnehmen.

**Patentansprüche**

1. Handoberfräse mit einem ein Fräswerkzeug (5) wenigstens teilweise umschließenden Auflagefuß (1), zu dem die Werkzeugdrehachse (7) normal verläuft und mit dem die Handoberfräse über die Werkstückoberfläche (11) geführt wird und an der eine die Position des Werkzeuges markierende Anzeigeeinrichtung angeordnet ist, dadurch gekennzeichnet, daß mindestens ein Anschlagmittel (25, 27) an dem Auflagefuß (1) bis an das Fräswerkzeug (5) heran bzw. darüber hinaus verschiebbar angeordnet ist und daß das Anschlagmittel (25, 27) eine vorzugsweise nah benachbart zu einer zu bearbeitenden Werkstückoberfläche (11) angeordnete Markierung (33, 35) trägt.

2. Handoberfräse nach Anspruch 1, dadurch gekennzeichnet, daß das Anschlagmittel (25, 27) an dem Auflagefuß (1) parallel zur Vorschubrichtung verschiebbar, gegen Herausfallen gesichert geführt ist.

3. Handoberfräse nach Anspruch 2, dadurch gekennzeichnet, daß das Anschlagmittel (25, 27) mindestens einen drehbar gelagerten Wälzkörper (43) hält, dessen Umfang eine dem Fräswerkzeug (5) zuordenbare Anschlagfläche trägt.

4. Handoberfräse nach Anspruch 3, dadurch gekennzeichnet, daß die Drehachse mindestens eines Wälzkörpers (43) parallel zur Werkzeugdrehachse verläuft.

5. Handoberfräse nach Anspruch 4, dadurch gekennzeichnet, daß der Wälzkörper (43) auf dem Anschlag verschiebbar ist.

FIG.1

FIG. 2

FIG. 3

**Europäisches
Patentamt**

**EUROPÄISCHER
RECHERCHENBERICHT**

Nummer der Anmeldung

**EP 91 11 2775**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-907 123 (FESTO) <br> * Seite 3, rechte Spalte, Zeile 64 - Seite 3, rechte Spalte, Zeile 121; Abbildungen 1,9-11 * * <br> – – – | 1 | B 23 Q 17/22 |
| A | DE-C-925 551 (MAFELL) <br> * Anspruch 7; Abbildungen 1-3 * * <br> – – – | 1 | |
| A | CH-A-590 117 (KOBLER) <br> * Anspruch 2; Abbildung 2 * * <br> – – – | 1 | |
| A | US-A-3 171 451 (WILSON) <br> * Anspruch 1; Abbildungen 1-6 * * <br> – – – | 1 | |
| A | DE-A-3 901 556 (FESTO) <br> * Anspruch 13 * * <br> – – – – – | 1 | |

| | RECHERCHIERTE SACHGEBIETE (Int. Cl.5) |
|---|---|
| | B 23 Q <br> B 27 C |

**Der vorliegende Recherchenbericht wurde für alle Patentansprüche erstellt**

| Recherchenort | Abschlußdatum der Recherche | Prüfer |
|---|---|---|
| Den Haag | 15 November 91 | DE GUSSEM J.L. |